Europäisches Patentamt

European Patent Office

Office européen des brevets

(19)

(11) **EP 0 501 295 B1**

(12) **EUROPÄISCHE PATENTSCHRIFT**

(45) Veröffentlichungstag und Bekanntmachung des Hinweises auf die Patenterteilung:
27.11.1996 Patentblatt 1996/48

(51) Int Cl.6: **D03D 1/02**, B60R 21/16

(21) Anmeldenummer: **92102740.5**

(22) Anmeldetag: **19.02.1992**

(54) **Unbeschichtetes Gewebe für die Herstellung von Airbags**

Uncoated web for the manufacture of airbags

Tissu non-enduit pour la production de coussins gonflables

(84) Benannte Vertragsstaaten:
BE DE ES FR GB IT NL PT SE

(30) Priorität: 26.02.1991 DE 4105943
07.01.1992 DE 4200161

(43) Veröffentlichungstag der Anmeldung:
02.09.1992 Patentblatt 1992/36

(73) Patentinhaber: **Akzo Nobel N.V.**
6824 BM Arnhem (NL)

(72) Erfinder:
• **Graefe, Hans Albert**
W-5830 Schwelm (DE)
• **Kaiser, Dieter**
W-5600 Wuppertal 1 (DE)

• **Krummheuer, Wolf Rüdiger, Dr.**
W-5600 Wuppertal 1 (DE)
• **Siejak, Volker**
W-4100 Duisburg 1 (DE)

(74) Vertreter: **Fett, Günter et al**
**Akzo Patente GmbH,**
**Postfach 10 01 49**
**42097 Wuppertal (DE)**

(56) Entgegenhaltungen:
EP-A- 0 314 867          EP-A- 0 416 483
EP-A- 0 436 950          EP-A- 0 442 373
EP-A- 0 454 213          CA-A- 974 745
US-A- 3 842 583          US-A- 4 977 016

EP 0 501 295 B1

**Beschreibung**

Die Erfindung betrifft ein unbeschichtetes Gewebe aus Synthesefilamentgarnen in dichter Gewebeeinstellung zur Herstellung eines Airbags.

Bei Geweben, die zur Herstellung von Airbags Einsatz finden, wird besonders eine niedrige Luftdurchlässigkeit gefordert. Diese wurde bisher vorwiegend durch Beschichten der für Airbags vorgesehenen Gewebe erzielt. Beschichtete Gewebe zeigen aber, neben erhöhten Produktionskosten, auch erhebliche Nachteile im Gebrauch, unter denen der gegenüber unbeschichteten Geweben höhere Raumbedarf bei der Unterbringung im Lenkrad besonders herauszustellen ist.

Deshalb wurden Verfahren zur Herstellung von unbeschichteten Airbaggeweben entwickelt. Die geforderte niedrige Luftdurchlässigkeit wird hier durch eine sehr dichte Gewebeeinstellung sowie durch besondere Maßnahmen in der Ausrüstung wie Kalandrieren (z.B. EP-A- 314 867) oder Thermofixieren (z.B. CA-A- 974 745) eingestellt.

Die niedrige Luftdurchlässigkeit ist zwar die wichtigste der an Airbaggewebe zu stellenden Forderungen, ein gebrauchstüchtiges Gewebe dieser Art muß aber noch eine Reihe anderer wichtiger Bedingungen erfüllen, unter denen eine hohe Festigkeit und eine gute Faltbarkeit besonders im Vordergrund stehen. Letztere ist für das Unterbringen des Airbags im Lenkrad von Fahrzeugen mit möglichst geringem Raumbedarf von entscheidender Bedeutung. Eine gute Faltbarkeit ermöglicht aber auch ein problemloses Aufblasen des Airbags zum Schutz des Fahrzeuginsassen bei einem Unfall.

Um hohe Festigkeiten erzielen zu können, wurden bislang für die Herstellung von Airbags besonders Garne mit einem hohen Titer der Einzelfilamente eingesetzt. So schlägt US-A 3 842 583 hierfür Garne mit einem Filamenttiter von 6,0 - 6,2 den (6,6 - 6,8 dtex) vor.

In CA-A- 974 745 wird ein Garn mit einem Filamenttiter von 6 den (6,7 dtex) genannt.

In US-A- 4 977 016 wird zwar ein Garntiterbereich von 400 - 600 den (440 - 660 dtex) bei 100 - 300 Einzelfilamenten angegeben, die Erfindung wird aber in den Ausführungsbeispielen nur mit einem Garn mit einem Titer von 440 den und 100 Einzelfilamenten, was einem Filamenttiter von 4,4 den (4,8 dtex) entspricht, beschrieben.

In EP-A 0 416 483 wird für Airbaggewebe ein Garntiter von 300 - 400 dtex bei einer Filamentzahl von 72 genannt, woraus sich Filamenttiter von 4.16 - 5.56 dtex ergeben. Im einzigen Ausführungsbeispiel dieses Dokumentes wird ein Garn 350 f 72, was einen Filamenttiter von 4.86 dtex ergibt, beschrieben. Die für Airbaggewebe geforderte niedrige Luftdurchlässigkeit wird gemäß der dort gegebenen Lehre durch eine Kalandrier- oder Sanforisierbehandlung eingestellt.

Mit diesen Titern wird zwar die geforderte Festigkeit erzielt, sie haben aber den erheblichen Nachteil einer hohen Steifigkeit, womit die Faltbarkeit sehr stark negativ beeinflußt wird. Die Forderung eines möglichst geringen Platzbedarfes beim Unterbringen des Airbags, z.B. im Lenkrad des Fahrzeugs, und ein problemloses Aufblasen kann mit Titern dieser Größenordnung nicht ausreichend erfüllt werden.

Auch sehr niedrige Filamenttiter wurden bereits für die Herstellung von Airbaggeweben vorgeschlagen. So nennt JP-A- 64-041 438 hierfür Titer unter 3 den (3,3 dtex) und bevorzugt sogar Titer unter 2 den (2,2 dtex). Bei diesen Titern besteht zwar nicht das Problem der nicht ausreichenden Faltbarkeit, sie zeigen aber im Hinblick auf die Wirtschaftlichkeit erhebliche Nachteile. So können in der Chemiefaserspinnerei feine Titer nicht so kostengünstig hergestellt werden wie gröbere. Außerdem müssen beim Verstrecken mehr Filamentbrüche in Kauf genommen werden, woraus ein flusiges und für die Weiterverarbeitung in der Weberei nur wenig geeignetes Material resultiert. Dieser Nachteil wirkt sich beim Weben in sehr dichter Gewebeeinstellung, die bei Airbaggeweben nötig ist, besonders deutlich aus. Bei Verarbeitung von Garnen solcher feiner Einzeltiter muß deshalb eine geringere Webleistung in Kauf genommen werden. Schließlich sind sehr feine Titer auch im Hinblick auf die Scheuerfestigkeit an den Knickstellen des gefalteten Airbags problematischer als grobe Titer.

Es bestand deshalb die Aufgabe, ein Gewebe für die Herstellung von Airbags zu entwickeln, das die an Airbaggewebe gestellten Anforderungen wie geringe Luftdurchlässigkeit, hohe Festigkeit und hohe Scheuerbeständigkeit an den Faltstellen voll erfüllt, das ein weiches Auffangen des Fahrzeuginsassen bei einem Unfall ermöglicht und das darüberhinaus in kostengünstiger Weise hergestellt und weiterverarbeitet werden kann.

Diese Aufgabe wird gelöst durch ein unbeschichtetes Gewebe aus Filamentgarnen in dichter Gewebestellung, wobei das hierfür eingesetzte Garn ein Polyamidgarn mit einem Filamenttiter von 3,5 - 4,5 dtex und einem Heißluftschrumpf von mindestens 6 % (gemessen bei 190 °C) ist, welches Gewebe eine spezifische Steifigkeit $< 0.88 \cdot 10^{-2}$ und eine Luftdurchlässigkeit $< 10$ l/dm$^2$·min aufweist, wobei die Luftdurchlässigkeit mittels Schrumpfauslösung in einem Naßverfahren in einem wässrigen Bad bei 60 bis 140 °C eingestellt worden ist.

Überraschend wurde nun gefunden, daß diese Anforderungen nur mit Polyamidgarnen mit genau ausgewählten Filamenttitern in optimaler Weise erfüllt werden können. Nur wenn Polyamid-Garne mit einem Filamenttiter von 3,5 - 4,5 dtex zum Einsatz kommen, wird nämlich ein Gewebe erhalten, das im Hinblick auf Luftdurchlässigkeit, Festigkeit, Scheuerbeständigkeit der Faltstellen und vor allem Faltbarkeit, die für Airbaggewebe benötigten Eigenschaften voll gewährleistet. Polyamid-Garne mit diesem Titer können kostengünstig hergestellt werden und zeigen nicht die bei feineren Filamenttitern übliche Beeinträchtigung der Garnreinheit durch Flusen als Folge von Streckbrüchen.

Darüberhinaus bieten Polyamid-Garne mit einem Filamenttiter von 3,5 - 4,5 dtex noch den besonderen Vorteil einer geringeren Luftdurchlässigkeit gegenüber Garnen gleichen Garn- aber höheren Einzelfilamentiters. Dies bedeutet, daß bei solchen Polyamid-Garnen mit geringeren Fadenzahlen im Gewebe gearbeitet werden kann und trotzdem noch, bei Beachtung geeigneter Ausrüstungsbedingungen, ein Gewebe mit der für Airbags geforderten niedrigen Luftdurchlässigkeit erhalten werden kann. Somit ergibt sich bei diesen Polyamid-Garnen gegenüber Garnen mit höherem Filamenttiter ein deutlicher Kostenvorteil bei der Gewebeherstellung.

Geeignete Garntiter liegen in einem Bereich von

200 - 600 dtex. Versuche wurden mit Polyamid-Garnen
235 f 72 (Filamenttiter 3,3 dtex),
350 f 94 (Filamenttiter 3,8 dtex) und
470 f 104 (Filamenttiter 4,5 dtex) durchgeführt.

Die für die Herstellung von Airbaggeweben einzusetzenden Polyamid-Garne weisen bevorzugt eine Festigkeit von mindestens 60 cN/tex und eine Dehnung von 15 - 30 % auf. Hierbei werden in besonders vorteilhafter Weise die von den Automobilherstellern herausgegebenen Spezifikationen erfüllt.

Airbaggewebe können mit allen Synthesefilamentgarnen, von denen die obengenannten Festigkeits- und Dehnungswerte erfüllt werden, hergestellt werden. Als besonders gut geeignet haben sich jedoch Polyamid-Garne erwiesen. Sie besitzen gegenüber beispielsweise Polyestergarnen den bedeutenden Vorteil der höheren Elastizität, was auf einen flacheren Verlauf der Kraftlängenänderungslinie im Anfangsbereich zurückzuführen ist. In besonderer Weise haben sich Garne aus Polyamid 6.6 beim Einsatz für Airbaggewebe bewährt. Besonders bevorzugt werden hierbei Garne aus Polyamid 6.6, die einen bei der Polykondensation eingebrachten Hitzestabilisator enthalten.

Die Gewebe werden in dichter Gewebeeinstellung, bevorzugt in Leinwand- oder Panamabindung, hergestellt. Aber auch Köperbindungen können zum Einsatz kommen. Bei einem Polyamid-Garntiter von 235 dtex wird mit Fadenzahlen von 26 - 30/cm in Kette und Schuß gearbeitet. Bei Verwendung von Polyamid-Garnen mit einem Titer von 350 dtex liegen die Fadenzahlen bei 23 - 27/cm. Werden Polyamid-Garne mit einem Titer von 470 dtex eingesetzt, dann wird mit Fadenzahlen von 19 - 23/cm gearbeitet. Die hier angegebenen Zahlen beziehen sich auf die Leinwandbindung. Bei Panamabindung betragen die Fadenzahlen bei einem Garntiter 235 dtex beispielsweise 34 - 38/cm in Kette und Schuß.

Wichtig ist eine im wesentlichen symmetrische Gewebeeinstellung, das heißt, das Gewebe muß in Kette und Schuß gleiche oder nahezu gleiche Fadenzahlen aufweisen. Nur mit solchen Gewebeeinstellungen können die Forderungen der Automobilhersteller nach in Kette und Schuß gleichen Festigkeiten erzielt werden.

Die Einstellung der gewünschten Luftdurchlässigkeit erfolgt mit Hilfe eines Naßverfahrens, das in EP-A- 436 950 beschrieben wurde. Hierbei wird in einem wässrigen Bad in einem Temperaturbereich zwischen 60 - 140 °C eine Schrumpfauslösung vorgenommen. Anschließend wird lediglich getrocknet und nicht thermofixiert. Voraussetzung hierfür ist, daß Polyamid-Garne zum Einsatz kommen, die einen Heißluftschrumpf von mindestens 6 % (gemessen bei 190 °C) aufweisen.

Für Airbaggewebe wird gemäß den Spezifikationen der Automobilhersteller eine Luftdurchlässigkeit < 10 l/dm$^2$·min bei einem Prüfdifferenzdruck von 500 Pa gefordert. Diese Forderung gilt für den Kontaktteil des Airbags. Im Filterteil werden Luftdurchlässigkeiten von 20 - 80 l/dm$^2$·min zugelassen. Mit den erfindungsgemäß hergestellten Geweben ist es problemlos möglich, auch die Forderung nach der sehr niedrigen Luftdurchlässigkeit für den Kontaktteil des Airbags zu erfüllen.

Wie die nachstehende Tabelle zeigt, wird mit den erfindungsgemäß hergestellten Geweben aus Polyamid-Garnen mit einem Filamenttiter von 3,5 - 4,5 dtex jeweils eine geringere Luftdurchlässigkeit erhalten als bei Einsatz von Polyamid-Garnen mit höherem Filamenttiter:

| Garntype | Filament- titer dtex | Fadenzahl/cm | | Luftdurchlässigkeit l/dm$^2$·min bei 500 Pa |
|---|---|---|---|---|
| | | Kette | Schuß | |
| 235 f 36 | 6,5 | 28,8 | 27,9 | 7,7 |
| 235 f 72 | 3,3 | 27,8 | 27,7 | 3,1 |
| 350 f 72 | 4,9 | 25,2 | 25,7 | 5,8 |
| 350 f 94 | 3,8 | 25,0 | 24,6 | 4,1 |
| 470 f 72 | 6,5 | 21,3 | 21,1 | 7,5 |

(fortgesetzt)

| Garntype | Filament- titer dtex | Fadenzahl/cm | | Luftdurchlässigkeit l/dm$^2$·min bei 500 Pa |
|---|---|---|---|---|
| | | Kette | Schuß | |
| 470 f 104 | 4,5 | 20,7 | 21,1 | 4,5 |

Die in dieser Tabelle aufgeführten Vergleichsversuche wurden jeweils mit gleichen Fadenzahlen für die Polyamid-Garne mit feineren und gröberen Filamenttitern durchgeführt. Weitere Versuche haben gezeigt, daß die Fadenzahl um durchschnittlich 2 pro cm in Kette und Schuß gesenkt werden kann, wenn Polyamid-Garne mit einem Filamenttiter von 3,5 - 4,5 dtex an Stelle der bisher üblichen Polyamid-Garne mit einem Filamenttiter von 5,0 - 6,5 dtex zum Einsatz kommen. Auch mit dieser geringeren Fadenzahl sind die geforderten Luftdurchlässigkeiten von < 10 l/dm$^2$·min noch problemlos erreichbar. Damit ist bei Verwendung von Polyamid-Garnen mit einem Filamenttiter von 3,5 - 4,5 dtex im Vergleich zu den bisher eingesetzten Polyamid-Garnen mit einem Filamenttiter von 5,0 - 6,5 dtex eine Kosteneinsparung bei der Gewebeherstellung möglich.

Die Prüfung der Luftdurchlässigkeit der erfindungsgemäßen Gewebe erfolgte in Anlehnung an DIN 53887. In Abweichung von dieser DIN-Norm wurde jedoch der Prüfdifferenzdruck auf 500 Pa erhöht, um bei den erfindungsgemäß hergestellten Geweben noch ein eindeutiges Prüfsignal zu erhalten.

In besonders vorteilhafter Weise wirkt sich ein Titer von 3,5 - 4,5 dtex auf die Faltbarkeit von Airbaggeweben aus. Der gegenüber dem bisher vorwiegend eingesetzten Polyamid-Garn (Filamenttiter > 5 dtex) geringere Filamenttiter bewirkt eine Verringerung der Steifigkeit des Airbaggewebes, wodurch die Faltbarkeit deutlich verbessert wird. Damit wird der Platzbedarf beim Unterbringen des Airbags im Fahrzeug, z.B. im Lenkrad, geringer. Darüberhinaus bewirkt eine geringe Steifigkeit und damit bessere Faltbarkeit des Airbaggewebes aber auch ein problemloses Aufblasen des Airbags beim Auslösen der Airbagfunktion, wodurch in besonders vorteilhafter Weise die Schutzwirkung des Airbags für den Fahrzeuginsassen im Falle eines Aufpralls verbessert wird. Dies ist besonders bei einem sogenannten "Out-of-position"-Kontakt von Bedeutung. Hierunter ist eine von der normalen Sitzposition abweichende Sitzhaltung des Fahrzeuginsassen zu verstehen. Wird in dieser Situation die Airbagfunktion ausgelöst, so erfolgt bei Airbags, die mit Polyamid-Garnen mit Filamenttitern > 5 dtex hergestellt wurden, ein ruckartiger Aufprall des aufgeblasenen Airbags auf den Fahrzeuginsassen mit der Gefahr von Verletzungen, während bei der Verwendung von Airbaggeweben aus Polyamid-Garnen mit Filamenttitern von 3,5 - 4,5 dtex auf Grund der höheren Flexibilität des Gewebes und damit besseren Anpaßbarkeit an die Körperformen des Fahrzeuginsassen ein weicheres Auffangen möglich ist. In ganz besonderer Weise haben sich hier Gewebe aus Polyamid - Garnen mit einem Filamenttiter von 3,5 - 4,5 dtex als günstig erwiesen, da Polyamid gegenüber beispielsweise Polyester eine höhere Flexibilität besitzt und somit die positive Wirkung von Garnen mit einem Filamenttiter von 3,5 - 4,5 dtex durch die hohe Flexibilität des Polyamids noch zusätzlich verstärkt wird.

Die geringere Steifigkeit und damit bessere Faltbarkeit von Geweben aus Polyamid-Garnen mit einem Filamenttiter von 3,5 - 4,5 dtex gegenüber Geweben aus den bislang eingesetzten Polyamid-Garnen mit einem Filamenttiter > 5 dtex zeigt die nachstehende Tabelle:

| Garntype | Filamenttiter dtex | Spezifische Steifigkeit |
|---|---|---|
| 235 f 36 | 6,5 | 1,35·10$^{-2}$ |
| 235 f 72 | 3,3 | 0,68·10$^{-2}$ |
| 350 f 72 | 4,9 | 0,95·10$^{-2}$ |
| 350 f 94 | 3,8 | 0,80·10$^{-2}$ |
| 470 f 72 | 6,5 | 1,32·10$^{-2}$ |
| 470 f 104 | 4,5 | 0,88·10$^{-2}$ |

Die Testgewebe wurden in Leinwandbindung mit Fadenzahlen analog den oben gemachten Angaben hergestellt.

Die Prüfung der Biegesteifigkeit erfolgte mit dem Taber Stiffness Tester, Model 150 B, der Firma Taber Instruments. Bei diesem Gerät wird das Moment, das benötigt wird, um das Ende einer einseitig eingespannten Probe mit einer Breite von 38 mm und einer Länge von 50 mm um einen Winkel von 15 ° auszulenken, bestimmt. Als Maßeinheit wird die Stiffness Unit (SU) angegeben. 1 SU ist das Biegemoment (in CN·cm), das ein flächiger Prüfkörper der genannten Breite aufweist, wenn er um 15 ° ausgelenkt wird. Entgegen der üblichen Einspannlänge von 50 mm wurde bei den oben aufgeführten Versuchen jedoch mit einer Einspannlänge von 10 mm gearbeitet.

Um unterschiedliche Gewebe miteinander objektiv vergleichen zu können, wurde die spezifische Steifigkeit nach der folgenden Formel errechnet:

$$\text{Spez. Steifigkeit} = \frac{\text{Biegesteifigkeit x Luftdurchlässigkeit}}{\text{Titer}}$$

Neben der nach der obengenannten Methode ermittelten Stiffness Unit SU beeinflußen der Garntiter und die Luftdurchlässigkeit als indirektes Maß für die Gewebedichte die spezifische Steifigkeit.

Eine weitere Reduzierung des Filamenttiters bewirkt zwar eine weitere Verringerung der Steifigkeit des Gewebes und eine weiter verbesserte Faltbarkeit, beim Einsatz von Polyamid-Garnen mit einem Filamenttiter < 3,5 dtex verschlechtert sich jedoch die Garnreinheit sehr stark, wie die nachfolgende Tabelle der Flusenmessungen zeigt:

| Garntype | Filamenttiter dtex | Flusen pro t |
|---|---|---|
| 235 f 36 | 6,5 | 350 |
| 235 f 72 | 3,3 | 1800 |
| 470 f 72 | 6,5 | 300 |
| 470 f 104 | 4,5 | 800 |

Die bei Polyamid-Garnen mit einem Filamenttiter unter 3,5 dtex stark erhöhten Flusenzahlen ermöglichen nicht den Einsatz solch feintitriger Garne für die Herstellung von Airbags.

Die Wahl eines Filamenttiters von 3,5 - 4,5 dtex bei den für die Airbagherstellung vorgesehenen Polyamid-Garnen wirkt sich in einem gegenüber dem bisherigen Stand der Technik sichererem Airbagsystem aus. Mit aus diesen Polyamid-Garnen hergestellten Geweben können problemlos die Forderungen der Automobilhersteller nach hoher Festigkeit und geringer Luftdurchlässigkeit erfüllt werden. Dazu wird durch die höhere Flexibilität und bessere Entfaltbarkeit beim Auslösen der Airbagfunktion mit den erfindungsgemäß hergestellten Geweben ein sichereres Auffangen des Fahrzeuginsassen ermöglicht.

**Ausführungsbeispiele**

Beispiel 1

Aus einem Polyamid 6.6-Garn 235 f 72, was einem Einzeltiter von 3,3 dtex entspricht, wurde in Leinwandbindung ein Airbaggewebe mit 28 Fäden/cm in Kette und Schuß hergestellt. Das Gewebe wurde in einem wässrigen Bad auf einem Jigger zur Schrumpfauslösung behandelt. Hierzu wurde bei 40 °C begonnen und die Behandlungstemperatur auf 95 °C erhöht. Die eigentliche Schrumpfauslösung erfolgte bei dieser Temperatur. Anschließend wurde auf einem Spannrahmen bei 150 °C getrocknet. Die an diesem Gewebe ermittelte Luftdurchlässigkeit lag bei 3,1 l/dm$^2$·min, die spezifische Steifigkeit bei 0,68·10$^{-2}$.

Bei einem Vergleichsversuch mit einem Garntiter 235 f 36, was einem Einzeltiter von 6,5 dtex entspricht, wurde bei gleichen Herstellungsbedingungen in der Weberei und bei gleichen Ausrüstungsbedingungen eine Luftdurchlässigkeit von 7,7 l/dm$^2$·min und eine spezifische Steifigkeit von 1,35·10$^{-2}$ gemessen.

Beispiel 2:

Aus einem Polyamid 6.6-Garn 350 f 94, was einem Einzeltiter von 3,8 dtex entspricht, wurde in Leinwandbindung ein Airbaggewebe mit 25 Fäden/cm in Kette und Schuß hergestellt. Die Naßbehandlung und Trocknung erfolgte wie in Beipiel 1. Die an diesem Gewebe ermittelte Luftdurchlässigkeit lag bei 4,1 l/dm$^2$·min, die spezifische Steifigkeit bei 0,80·10$^{-2}$.

Bei einem Vergleichsversuch mit einem Garntiter 350 f 72, was einem Filamenttiter von 4,9 dtex entspricht, wurde bei gleichen Herstellungsbedingungen in der Weberei und bei gleichen Ausrüstungsbedingungen eine Luftdurchlässigkeit von 5,8 l/dm$^2$·min und eine spezifische Steifigkeit von 0,95·10$^{-2}$ gemessen.

Beispiel 3:

Aus einem Polyamid 6.6-Garn 470 f 104, was einem Einzeltiter von 4,5 dtex entspricht, wurde in Leinwandbindung ein Airbaggewebe mit 21 Fäden/cm in Kette und Schuß hergestellt. Die Naßbehandlung und Trocknung erfolgte wie in Beispiel 1. Die an diesem Gewebe ermittelte Luftdurchlässigkeit lag bei 4,5 l/dm$^2$·min, die spezifische Steifigkeit bei 0,88·10$^{-2}$.

Bei einem Vergleichsversuch mit einem Garntiter 470 f 72, was einem Filamenttiter von 6,5 dtex entspricht, wurde bei gleichen Herstellungsbedingungen in der Weberei und bei gleichen Ausrüstungsbedingungen eine Luftdurchlässigkeit von 7,5 l/dm$^2$·min und eine spezifische Steifigkeit von 1,32·10$^{-2}$ gemessen.

**Patentansprüche**

1. Unbeschichtetes Gewebe aus Synthesefilamentgarnen in dichter Gewebeeinstellung zur Herstellung eines Airbags, wobei das hierfür eingesetzte Garn ein Polyamidgarn mit einem Filamenttiter von 3,5 bis 4,5 dtex und einem Heißluftschrumpf von mindestens 6 %, gemessen bei 190 °C, ist, welches Gewebe eine spezifische Steifigkeit < 0,88·10$^{-2}$ und eine Luftdurchlässigkeit < 10 l/dm$^2$·min aufweist, wobei die Luftdurchlässigkeit mittels Schrumpfauslösung in einem Naßverfahren in einem wässrigen Bad bei 60 bis 140 °C eingestellt worden ist.

2. Gewebe nach Anspruch 1, dadurch gekennzeichnet, daß das hierfür eingesetzte Polyamidgarn einen Garntiter von 200 bis 600 dtex aufweist.

3. Gewebe nach den Ansprüchen 1 bis 2, dadurch gekennzeichnet, daß das Gewebe eine wenigstens im wesentlichen symmetrische Gewebeeinstellung aufweist.

4. Airbag aus einem Gewebe nach wenigstens einem der Ansprüche 1 bis 3.

5. Airbagsystem unter Verwendung eines Airbags nach Anspruch 4.

**Claims**

1. An uncoated woven made of synthetic filament yarns in a dense weave setting for manufacturing an airbag, the yarn used to this end being a polyamide yarn having a filament titre of 3.5 to 4.5 dtex and a hot air shrinkage of at least 6% measured at 190°c, the woven having a specific rigidity < 0.88 · 10$^{-2}$ and an air permeability < 10 l/dm$^2$ ·min, the air permeability being adjusted by means of shrinkage release in a wet process in an aqueous bath at 60 to 140°C.

2. A woven according to claim 1, characterised in that the polyamide yarn used to this end has a yarn titre of 200 to 600 dtex.

3. A woven according to claims 1 to 2, characterised in that the woven has an at least substantially symmetrical weave setting.

4. An airbag made of a woven according to at least one of claims 1 to 3.

5. An airbag system using an airbag according to claim 4.

**Revendications**

1. Tissu non enduit en filés de filament synthétique, présentant une structure de tissu serrée, pour la production d'un coussin gonflable, tissu pour lequel le filé utilisé est un filé de polyamide présentant un titre de filament de 3,5 à 4,5 dtex et un retrait à l'air chaud (mesuré à 190°C) d'au moins 6%, ledit tissu possédant une rigidité spécifique < 0,88 · 10$^{-2}$ et une perméabilité à l'air < 10 l/dm$^2$ · min, la perméabilité à l'air étant réglée au moyen d'un retrait provoqué, réalisé dans un procédé par voie humide, dans un bain aqueux ayant une température de 60 à 140°C.

2. Tissu selon la revendication 1, caractérisé en ce que le filé de polyamide utilisé pour le tissu présente un titre de filé de 200 à 600 dtex.

3. Tissu selon la revendication 1 ou 2, caractérisé en ce qu'il présente une structure de tissu symétrique, au moins pour l'essentiel.

4. Coussin gonflable constitué d'un tissu selon l'une quelconque des revendications 1 à 3.

5. Système à coussin gonflable, utilisant un coussin gonflable selon la revendication 4.